# EUROPÄISCHE PATENTSCHRIFT

(11) **EP 0 481 266 B1**
(45) Veröffentlichungstag und Bekanntmachung des Hinweises auf die Patenterteilung: **24.03.1999**
(21) Anmeldenummer: 91116466.3
(22) Anmeldetag: 26.09.1991
(51) Int. Cl.: B32B 15/08, B65D 65/40

(54) **Folie**
Foil
Feuille

(30) Priorität: 27.09.1990 DE 4030534; 08.02.1991 DE 4103800
(43) Veröffentlichungstag der Anmeldung: 22.04.1992
(73) Patentinhaber: Schmoock, Helmuth, D-21481 Lauenburg (DE)
(72) Erfinder: Schmoock, Helmuth, D-21481 Lauenburg (DE)
(74) Vertreter: Heldt, Gert, Dr. Dipl.-Ing.

(56) Entgegenhaltungen:
- EP-A- 0 049 083
- EP-A- 0 199 228
- GB-A- 2 064 427
- WORLD PATENTS INDEX LATEST Derwent Publications Ltd., London, GB; AN 87-083960 & JP-A-62 035 840 (ASAHI KASEI POLYFLEX) 16. Februar 1987
- PATENT ABSTRACTS OF JAPAN vol. 12, no. 417 (P-782) 07. November 1988 & JP-A-63 153 714 (MATSUSHITA ELECTRIC IND CO) 27. Juni 1988

## Beschreibung

Die Erfindung betrifft eine Folie mit zwei im wesentlichen planparallelen Folienoberflächen, von denen mindestens eine mit einer Metallschicht versehen ist, auf deren der Folienoberfläche abgewandten metallischen Oberfläche ein Schicht aufgebracht ist, die die metallische Oberfläche ganzflächig bedeckt.

Lebensmittel aller Art, aber auch kosmetische Artikel müssen häufig dampf- und sauerstoffdicht verpackt sein. Zu diesem Zwecke wurden bisher Kunststoffolien mit einer Aluminiumschicht im Verbund kaschiert. Andere Folien wurden mit einer Dispersion aus Polyvenylidenchlorid beschichtet. Die in diesem Zusammenhang bekannt gewordenen Verfahren sind sehr kostenaufwendig und wenig umweltfreundlich. Die enstehenden Produkte sind teuer. Schließlich hatten die auf diese Weise entstandenen metallisierten Folien, die im übrigen in großen Mengen im Einsatz sind, den entscheidenden Nachteil, daß sie in einem sehr stark wechselnden Umfang gasdurchlässig sind. Insbesondere stört ihre Sauerstoff- und Dampfdurchlässigkeit. Um diese abzustellen, sind bis zur Gegenwart intensive Vorschungen betrieben worden, die jedoch nicht zu dem Erfolg führten, die Gasundurchläsigkeit dieser Folien zu erreichen.

Darüber hinaus sind mit einer Metallschicht bedampfte Folien bekannt geworden, auf deren der Folie abgewandte Oberfläche der Metallschicht eine dünne transparente Schicht aufgetragen ist. Diese besteht aus Metallverbindungen. Sie genügt der Bemessungsforschrift, daß mindestens 60 Mol % der Metallelemente Zirkonium und Silikon enthalten. Diese dünne transparente Schicht ist als eine Anti-Reflexionsschicht ausgebildet, die zusätzlich in starke Maße gegen Abreiben widerstandsfähig ist. Sie ist darüber hinaus widerstandsfähig gegen Licht und Hitze, läßt Strahlen des sichtbaren Lichtes durch und reflektiert Strahlen im Infrarotbereich. Zur Aufrechterhaltung dieser Fähigkeiten ist die Schicht abriebfest ausgebildet. Damit wird bezweckt, daß durch mechanische Beanspruchungen dieser Schicht, beispielsweise durch reibende Beanspruchung, die Eigenschaften dieser Schicht nicht verloren gehen, und- zwar weder die Fähigkeit, sichtbares Licht durch das Laminat hindurch zu lassen, noch diejenige infrarotes Licht zu reflektieren.

Die Schicht ist jedoch nicht in der Lage, die mit der Metallschicht bedampfte Folie gasdicht zu halten. Weder ist die Schicht selbst gasdicht, noch ist sie in der Lage, die Gasdichtigkeit der auf die Folie aufgedampften Metallschicht zu erhalten. Das die Schicht ausbildende Gemisch aus Zirkonium, Silikon und Sauerstoff ist gegenüber der Metallschicht nicht rutschfest verankert. Durch gleitendes Reiben dieser Schicht gegenüber der Metallschicht kann diese leicht verletzt werden und damit ihre Gasdichtigkeit einbüßen. Außerdem muß damit gerechnet werden, daß die Zirkonium-Anteile auf der Metallschicht eine Beschichtung ausbilden, die im Falle von Knick- bzw. Faltbewegungen des gesamten Laminats scharfkantig in die Metallbeschichtung eindringen und deren Gasdichtigkeit zerstören.

Aufgabe der vorliegenden Erfindung ist es daher, die Folie der einleitend genannten Art so zu verbessern, daß sie leicht, sicher und mit einem möglichst geringen Aufwand herstellbar und in einem weitem Umfange verwendbar ist.

Diese Aufgabe wird erfindungsgemäß dadurch gelöst, daß die Schicht als eine fest auf der metallischen Oberfläche haftende Schutzschicht ausgebildet ist, die aus einem organischen Produkt besteht und auf die metallische Oberfläche unmittelbar nach der Auftragung der Metallschicht innerhalb einer zur Metallisierung benutzten Metallisierungsanlage noch vor einer mechanischen Belastung der metallischen Oberfläche aufgedampft ist, wobei das organische Produkt aus seiner dampfförmigen Phase eine gute Affinität zum Metall der Metallschicht besitzt und fest auf dieser haftet.

Eine auf diese Weise geschützte Metallschicht hat den großen Vorteil, daß ein Zerscheuern der aufgebrachten Metallschicht bei späteren Bearbeitungen vermieden werden kann. Auf diese Weise bleibt die Metallschicht auch nach der vorgenommenen Verarbeitung gasdicht, so daß sie weder Sauerstoff noch Wasserdampf durchläßt. Die aufgedampfte Schutzschicht kann hinsichtlich ihrer Schichtstärke im gewünschten Umfange gut kontrolliert werden, zumal auch bei größeren Toleranzen in der Schichtstärke weder mit einer Ablösung der Schutzschicht noch mit einer Beeinträchtigung der Weiterverarbeitung gerechnet werden muß. Die nachhaltig gegen Zerscheuern geschützte Metalloberfläche behält ihre Gasdichtigkeit, da die microporöse Verdünnung der Oberfläche durch Zerscheuern der Metallschicht, die auf diese Weise gasdurchlässig wird, vermieden wird. Die fest auf der Metallschicht haftende Schutzschicht vermag auch die Verschiebungen einzelner Lagen der metallisierten Folie aufzunehmen, die zu einem Wickel aufgewickelt ist. Diese Verschiebungen können daher zu einer Beeinträchtigung der metallischen Oberfläche durch Zerscheuern nicht führen. Vielmehr können sich einerseits durch das Aufwickeln zu einer Rolle in der Rolle entstehende Spannungen sehr gut ausgleichen, weil die einzelnen Schichten auf ihrer jeweils benachbarten Schutzschicht gut gleiten, andererseits haftet die Schutzschicht fest auf der zu schützenden Metallschicht, so daß Abtragungen der Schutzschicht nicht zu besorgen sind. Die Schutzschicht kann daher sehr dünn aufgetragen werden, so daß sie das Gewicht der Folie nur unwesentlich erhöht, günstig im Preis ist und eine gegen Zerscheuern wenig anfällige Oberfläche aufweist. Die Schutzschicht kann preisgünstig und schnell aufgetragen werden, und zwar zweckmäßigerweise unmittelbar im Anschluß an die Aufdampfung der Metallschicht. Eine ständige Kontrolle ist beim Aufdampfen der Schutzschicht auf die Metallschicht nicht notwendig.

Gemäß einer weiteren bevorzugten Ausführungsform der Erfindung kann das organische Produkt als ein Kunstharz oder als ein Naturharz ausgebildet sein. Allerdings können als organische Produkte auch Kunst- oder Naturwachse mit einem Molekulargewicht unter 10.000 kp ausgewählt werden. Schließlich ist es auch denkbar, Gemische aus Kunst- und Naturharzen bzw. Kunst- und Naturwachsen, aber auch Gemische aus Harzen und Wachsen herzustellen und mit diesen die Metallschicht zu bedampfen. Dabei kann die Auswahl nach einer Vielzahl von Kriterien getroffen werden, beispielsweise entsprechend dem Verwendungszweck der mit der Schutzschicht versehenen Folie, aber auch entsprechend der jeweils gewünschten Art der Weiterverarbeitung. So muß in vielen Fällen die aufgebrachte Schutzschicht bedruckbar, in anderen Fällen mit einem extrudierbaren Material beschichtbar sein.

Gemäß einer weiteren bevorzugten Ausführungsform der Erfindung wird bei einem Verfahren zur Herstellung eines Schutzes für eine auf eine Folie aufgedampfte Metallschicht die der Folie abgewandte metallische Oberfläche mit einer Schutzschicht bedeckt, die aus einem organischen Produkt hergestellt wird, das unmittelbar im Anschluß an die Aufdampfung der Metallschicht innerhalb der zur Metallisierung benutzten Metallisierungsanlage auf die Metallschicht aufgedampft wird, bevor die Metallschicht mechanischen Belastungen ausgesetzt wird, wobei das organische Produkt sich auf seiner dampfförmigen Phase mit einer guten Affinität zum Metall auf der Metallschicht niederschlägt und auf dieser fest haftet.

Auf diese Weise entsteht die mit der zu schützenden Oberfläche fest verbundene Schutzschicht, die auch großen Beanspruchungen gewachsen ist. Die feste Verbindung der Schutzschicht mit der Metallschicht verlagert die mechanischen Belastungen auf die sehr widerstandsfähige Schutzschicht, so daß die Metallschicht ausgiebig und widerstandsfähig geschützt ist.

Die organische Schicht wird unmittelbar nach dem Aufdampfen der Metallschicht auf diese aufgetragen, bevor die mit der Metallschicht bedeckt Folie aufgewickelt wird. Auf diese Weise ist dafür gesorgt, daß die Schutzschicht auf die Metallschicht aufgebracht wird, bevor diese in irgend einer Weise mechanisch belastet, insbesondere zerscheuert wird. Erst nach der Aufbringung der Schutzschicht wird die Folie mit der die metallische Oberfläche schützenen Schutzschicht in einer Rolle aufgewickelt, so daß auch durch das Aufwickeln keine mechanischen Beanspruchung in der Form von Verkratzungen und Zerscheuerungen auf die metallische Oberfläche einwirken können. Bevor noch eine Gefährdung der Metallschicht durch Zerscheuern auftreten kann, ist bereits die Schutzschicht zum Schutze der Metallschicht vorhanden und kann die mechanische Beanspruchung von der aufgebrachten Metallschicht abhalten. Sie bildet mit der Metallschicht ein einheitliches Ganzes, das einerseits sehr widerstandsfähig und andererseits in sehr hohem Maße gasdicht ist.

Gemäß einer weiteren bevorzugten Ausführungsform der Erfindung kann die Auswahl der organischen Produkte, unabhängig davon, ob sie als Natur- oder als Kunstharze, als Natur- oder Kunstwachse oder als ein Gemisch aus einigen oder allen Teilkomponenten ausgebildet sind oder ob sie als zusätzliche Mischungskomponente noch ein Gleitmittel enthalten so aufgebracht werden, daß sie als Primerung für einen auf die metallische Seite der Folie aufzubringenden Druck geeignet sind. Bei einer Auswahl entsprechender Harze, Wachse bzw. Gleitmittel kann auf diese Weise auf eine zusätzliche Primerung der Folie vor dem Bedrucken ihrer mit der Metallschicht versehene Oberfläche verzichtet werden. Darüber hinaus ist es denkbar, die organischen Produkte gegebenenfalls mit einer Gleitmittelbeimischung so aufzutragen, daß die gegen das Zerscheuern der Metallschicht aufgebrachte Schutzschicht auch zum Schutz gegen Korrosionen der Metallschicht geeignet ist.

Gemäß einer weiteren bevorzugten Ausführungsform der Erfindung wird die organische Schicht auf die Metallschicht unmittelbar aus mindestens einem in der Bedampfungsanlage vorgesehenen gleichmäßig beheizten Verdampfer aufgedampft, dem ein zur Verdampfung kommendes organisches Material mit einer Geschwindigkeit zugeführt wird, die in Übereinstimmung mit einer Bedampfungsgeschwindigkeit ist, mit der die Metallschicht auf ein Trägermaterial aufgetragen wird. Durch die Badampfung wird eine Schutzschicht von beliebig bestimmbarer Dicke auf die zu schützende Metallschicht aufgebracht. Dabei wird die Zuführgeschwindigkeit des zur Verdampfung kommenden organischen Materials auf die Bedampfungsgeschwindigkeit abgestellt, mit der die Metallschicht auf ein Trägermaterial aufgetragen wird. Auf diese Weise kann ständig mit einer gleichbleibenden Dicke der Schutzschicht gerechnet werden.

Weitere Einzelheiten der Erfindung ergeben sich aus der nachfolgenden ausführlichen Beschreibung und den beigefügten Zeichnungen, in denen eine bevorzugte Ausführungsform der Erfindung beispielsweise veranschaulicht ist.

In den Zeichnungen zeigen:

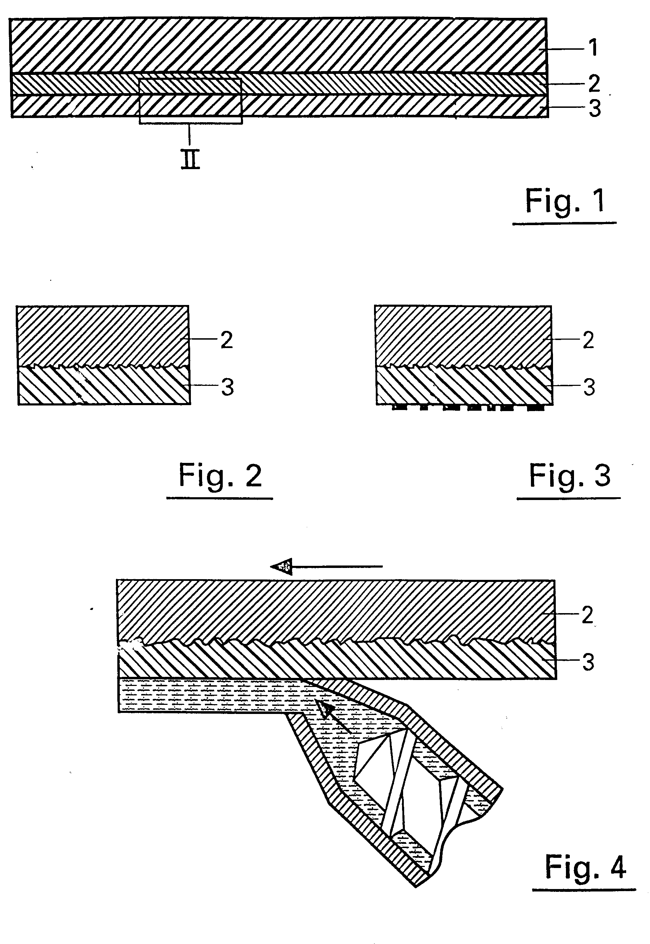

- Fig. 1: einen Querschnitt durch eine metallisierte Folie mit aufgebrachter Schutzschicht,
- Fig. 2: eine vergrößerte Darstellung eines Querschnittes einer Metallschicht mit aufgebrachter Schutzschicht,
- Fig. 3: einen vergrößerten Querschnitt einer Metallschicht mit aufgebrachter Schutzschicht, auf die ein Druck aufgebracht ist,
- Fig. 4: einen vergrößerten Querschnitt einer Metallschicht mit aufgebrachter Schutzschicht, auf die eine extrudierte Schicht aufgebracht ist.

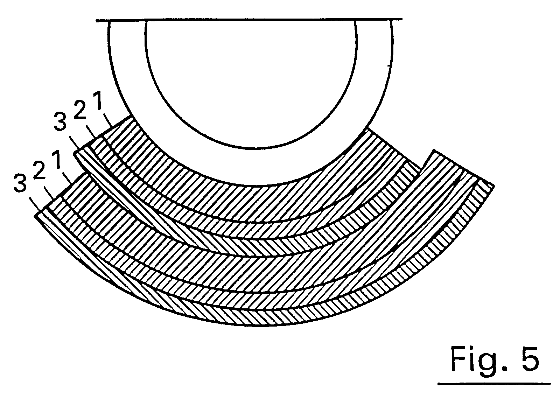

- Fig. 5: einen Teilquerschnitt durch zwei einander benachbarte Lagen einer aufgewickelten Folie,

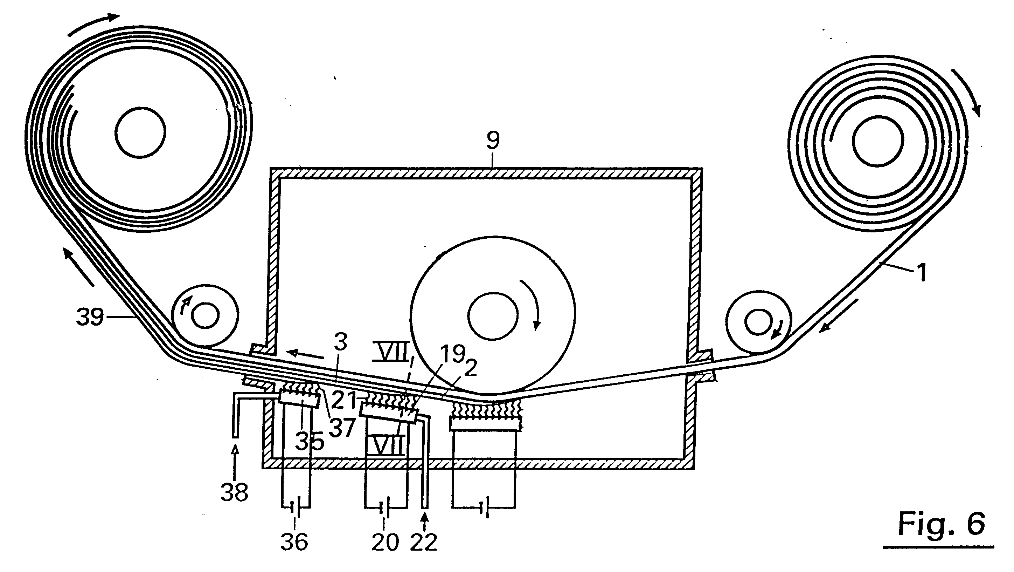

- Fig. 6: eine Systemskizze einer Bedampfungsanlage mit einer Bedampfungsstation zur Aufbringung der Schutzschicht und

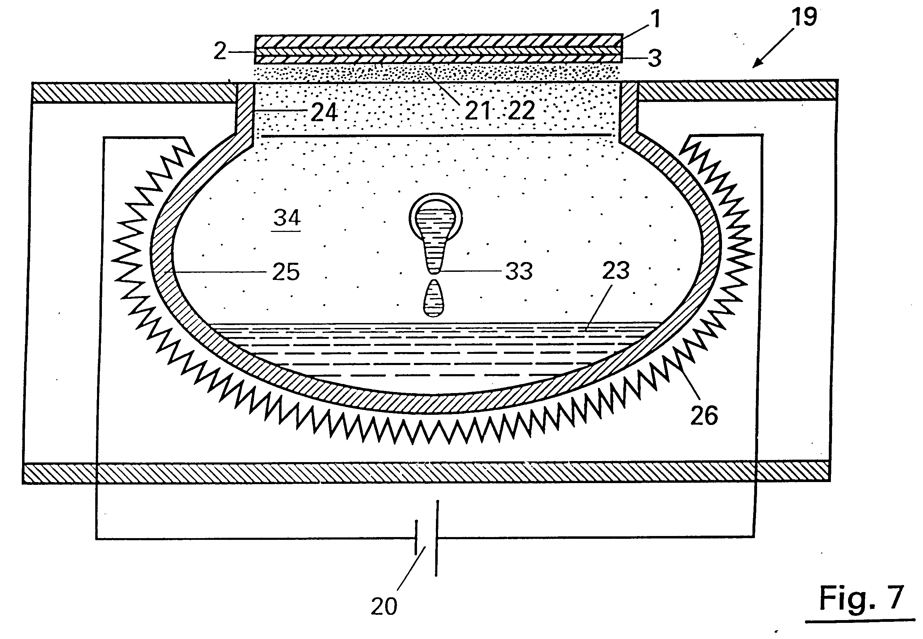

- Fig. 7: einen Querschnitt durch einen Verdampfer entsprechend der Schnittlinie VII - VII in Fig. 6 mit einer sich oberhalb des Verdampfers erstreckenden zu bedampfenden Folie.

Eine Folie besteht im wesentlichen aus einer Trägerschicht (1), einer Metallschicht (2) sowie einer Schutzschicht (3). Die Metallschicht (2) haftet fest auf dem Trägermaterial (1) auf das sie aufgedampft oder in anderer Weise aufgetragen sein kann. Die Schutzschicht (3) ist auf eine dem Trägermaterial (1) abgewandte Oberfläche (6) der Metallschicht (2) aufgetragen, auf der sie fest haftet. Die Schutzschicht (3) kann aus einem organischen Produkt gebildet werden. Dieses organische Produkt kann als ein Kunstharz, insbesondere als ein Lackharz ausgebildet sein. Es ist jedoch auch möglich, für das organische Produkt ein Naturharz zu verwenden. Insbesondere ist daran gedacht, als organisches Produkt Kautschuk zu verwenden. Außerdem kommen Gemische aus Kunstharzen und Naturharzen als Schutzschicht in Betracht. Schließlich kommen als organische Produkte auch Wachse zur Anwendung, und zwar sowohl Kunstals auch Naturwachse.

Von großer Wichtigkeit ist, daß die Schutzschicht (3) auf die Metallschicht (2) zu einem Zeitpunkt aufgetragen wird, an dem diese Metallschicht (2) noch völlig unverkratzt ist. Zu diesem Zwecke wird die Schutzschicht (3) auf die Metallschicht (2) aufgebracht, unmittelbar nachdem diese auf das Trägermaterial (1) aufgedampft worden ist. Die Auftragung der Schutzschicht (3) erfolgt zweckmäßigerweise durch Aufdampfen. Dabei ist hinsichtlich der aufgedampften Menge darauf zu achten, daß die Schutzschicht (3) nicht zu dick ausgebildet wird. Durch das Aufdampfen ist gewährleistet, daß die Schutzschicht in einer gleichmäßigen Dicke über die gesamte Fläche der Metallschicht (2) aufgebracht wird. Darüber hinaus wird auf diese Weise dafür gesorgt, daß die Schutzschicht (3) eine hohe Dichte besitzt. Diese reicht aus, um die Metallschicht (2) nicht nur gegen Verkratzen und Zerscheuern zu schützen, sondern darüber hinaus auch die Gasdichtigkeit der Metallschicht (2) zu erhalten. Da die Metallschicht (2) im unbeschädigten Zustand eine für Verpackungen ausreichende Gasdichtigkeit besitzt, wird diese durch die zusätzliche Aufbringung der sehr dichten Schutzschicht (3) nicht nur erhalten, indem sie einen Schutz gegen Zerscheuern bildet, sondern auch noch zusätzlich durch die hohe Dichte der Schutzsschicht (3) unterstützt. Auf diese Weise bildet die Metallschicht (2) mit der Schutzschicht (3) eine hoch gasdichte Kombination, die insbesondere sauerstoffdicht und wasserdampfdicht ist.

Darüber hinaus ist die Schutzschicht (3) mit einer hohen mechanischen Festigkeit versehen. Sie wird aus einem Material hergestellt, dessen Festigkeit ausreicht, daß die aufgebrachte Schutzschicht (3) auch bei hohen Drucken, die auf die Schutzschicht (3) aufgebracht werden, noch blockfrei ist, so daß sie mit einer etwa auf ihr lastenden weiteren Schicht nicht verklebt.

Für die Qualität des gesamten Produktes ist es sehr wichtig, daß das organische Produkt zur Ausbildung der Schutzschicht (3) bei Temperaturen verdampfbar ist, die die Qualität des Gesamtmaterials nicht beeinträchtigen. In diesem Sinne ist das organische Produkt bei einer Temperatur verdampfbar, die im Regelfall um 100° bis 150° C liegt. Der Dampf des verwendeten organischen Produkts schlägt sich kondensierend an der mit der Schutzschicht (3) zu bedeckenden Metallschicht (2) nieder. Das organische Produkt bildet unabhängig von der Anzahl der Schichten, in denen es aufgetragen wird, mit der Metallschicht (2) eine gasdichte Kombination, die auch gegen den Durchtritt von Sauerstoff und Dämpfe dicht ist.

Darüber hinaus kann bei richtiger Auswahl des organischen Produkts, das entweder aus einem Naturharz oder aus einem Kunstharz, aber auch aus einem Naturwachs oder Kunstwachs oder aus einem Gemisch aus Naturharz und Kunstharz bzw. aus einem Gemisch von Naturwachs und Kunstwachs oder aus einem Gemisch von Harzen und Wachsen bestehen kann, dafür Sorge getragen werden, daß die entstehende Schutzschicht (3) die Metallschicht (2) auch gegen auftretende Korrosionen schützt. Wie sich aufgrund wissenschaftlicher Untersuchungen herausgestellt hat, entsteht eine Gasundichtigkeit bei metallbedampften Folien auch dadurch, daß die Metallschicht aufgrund von Korrosionen gasdurchlässig wird. Bei richtiger Auswahl von organischen Produkten zur Ausbildung der Schutzschicht (3) werden diese Korrosionen verhindert.

Bei der Unterscheidung zwischen Harzen und Wachsen wird in üblicher Weise davon ausgegangen, daß Harze organische Produkte sind, deren Molekulargewicht oberhalb von 10.000 kp liegt, während Wachse ein unter dieser Grenze liegendes Molekulargewicht besitzen. Bei Gemischen aus Harzen und Wachsen vergrößern Harze mit zunehmendem Molekulargewicht die mechanische Abriebfestigkeit und Wachse die Flexibilität der aufgebrachten Schutzschicht (3, 39). Im übrigen mu bei der Auswahl der Harze und Wachse, insbesondere auch hinsichtlich der Bestandteile an Naturharzen bzw. -wachsen einerseits und Kunstharzen bzw. -wachsen andererseits auf die zu erwartende Verwendung der hergestellten Folie abgestellt werden, beispielsweise darauf, gegen welche Gase und Dämpfe sie bei Berücksichtigung spezieller Umweltbedingungen dicht sein muß.

Darüber hinaus können dem jeweils zur Ausbildung der Schutzschicht (3) verwendeten organischen Produkt, nämlich dem Naturharz, dem Kunstharz bzw. dem Naturwachs bzw. Kunstwachs und/ oder Gemisch aus Kunstharz und Naturharz bzw. dem Gemisch aus Naturwachs und Kunstwachs und auch dem Gemisch aus Harzen und Wachsen Gleitmittel zugesetzt werden. Dieser Zusatz von Gleitmitteln erhöht das Gleitvermögen der entstehenden Schutzschicht (3) bezüglich einer auf dieser aufliegenden Belastung, beispielsweise einer benachbarten Folienlage in einem Wickel. In der Kombination des Gleitmittels mit dem jeweils verwendeten organischen Produkt kann das aus diesem und dem Gleitmittel entstehende Gemisch in einer vorher bestimmbaren Stärke auf die Metallschicht (2) aufgetragen werden. Die Gefahr einer Ablösung der aus diesem Gemisch bestehenden Schutzschicht (3) von der Metallschicht (2) besteht nicht. Darüber hinaus kann eine aus einem derartigen Gemisch bestehende Schutzschicht (3) auch gut weiterverarbeitet werden, beispielsweise durch Aufbringung eines graphischen Drucks, durch Kaschieren oder durch die Aufbringung von extrudierbarem Material.

Schließlich ist die Schutzschicht (3) auch geeignet, als Korrosionsschutz für das die Metallschicht (2) bildende Material zu dienen. Bei geeigneter Auswahl des organischen Produktes, das die Schutzschicht (3) ausbildet, wird die Metallschicht (2) nachhaltig gegen Korrosion geschützt. Dabei kann der Korrosionsschutz der jeweiligen Belastung durch korrosive Einflüsse angepaßt werden, denen die metallbeschichtete Folie ausgesetzt wird. Unabhängig davon, ob zur Ausbildung der Schutzschicht (3) Naturharze, Kunstharze und/ oder Gemische von beiden und/ oder Naturwachse und Kunstwachse und/ oder Gemische aus diesen beiden und/ oder Gemische aus Harzen und Wachsen Verwendung finden, können diese so ausgewählt werden, daß mit ihrer Hilfe Korrosionen verhindert werden. Dieser Korrosionsschutz besteht auch dann, wenn den Naturharzen, Kunstharzen, Naturwachsen und Kunstwachsen und/ oder den mit diesen möglichen Gemischen ein Gleitmittel zugesetzt wird.

Für die gleichmäßige Beschichtung der Metallschicht (2) mit der Schutzschicht (3) ist es sehr wichtig, daß diese aus der dampfförmigen Phase des organischen Produktes eine gute Affinität zum Metall der Metallschicht (2) besitzt. Auf diese Weise findet über die gesamte Fläche der Metallschicht (2) eine gute Verbindung zwischen der Schutzschicht (3) und der Metallschicht (2) statt. Die Schutzschicht (3) schlägt sich aus ihrer dampfförmigen Phase gleichmäßig auf die metallische Oberfläche nieder.

Bei der Auswahl des Produktes kann darauf geachtet werden, daß dieses nach seiner Aufbringung als Schutzschicht mit üblichen Druckverfahren bedruckbar ist. Zu diesem Zwecke wird zur Ausbildung der Schutzschicht (3) eine Auswahl unter Naturharzen, Kunstharzen, und/ oder Gemischen aus beiden, Natur- und Kunstwachsen und/ oder Gemischen aus beiden bzw. Gemischen aus Wachsen und Harzen, denen jeweils auch Gleitmittel beigegeben werden können, getroffen, die geeignet ist, die jeweilig entstehende Schutzschicht (3) als eine Primerung auszubilden. Diese Primerung stellt eine gute Grundlage für die Aufbringung eines graphischen Druckes dar, so daß darauf verzichtet werden kann, die Folie kurz vor der Bedruckung ihrer metallisierten Seite mit einer gesonderten Primerung zu versehen. Darüber hinaus kann eine derart ausgebildete Schutzschicht (3) bei der Auswahl der richtigen Mischungspartner als Haftverbesserer für eine gegebenenfalls auch zu tragende extrodierte Schicht ausgebildet sein. Eine derartige Haftverbesserung für Koextrosion wird insbesondere durch niedermolekulare wachsartige Olefine erreicht.

Darüber hinaus ist die Schutzschicht (3) auf ihrer der Metallschicht (2) abgewandten Oberfläche gut kaschierbar, so daß Kleber und andere Lösungen gut auf diese der Metallschicht (2) abgewandte Oberfläche der Schutzschicht (3) aufgebracht werden können. Schließlich ist es in vielen Fällen notwendig, die Schutzschicht (3) auf ihrer der Metallschicht (2) abgewandten Oberfläche mit einem extrudierbaren Material beschichten zu können. Die Oberfläche muß mithin eine Beschaffenheit besitzen, die zu einer guten Kristallisation des extrudierten Materials auf der Metallschicht (2) führt. Dabei bilden Polyäthylene und Polypropylene gute Haftgrundlagen für eine Polyolfin-Koextrosion.

Schließlich sollte die Schutzschicht (3) aus einem Material bestehen, das physiologisch einwandfrei ist und Gesundheitsschädigungen ausschließt, selbst wenn in der metallisierten Folie Lebensmittel verpackt werden. Aus dem gleichen Grunde sollte die Schutzschicht (3) auch geruchsfrei sein.

Das Trägermaterial kann aus einem Polypropylen oder aus einem Polyäthylen bestehen. Es ist auch denkbar als Trägermaterial (1) ein Polyester, ein Polyamid oder ein Polystyrol zu verwenden. Schließlich kann als Trägermaterial auch ein Polyvenylchlorid in Betracht kommen.

Zweckmäßigerweise wird ein organisches Produkt (22), das aus einem Naturharz, einem Kunstharz und/ oder einem Gemisch aus beiden, aus einem Kunstwachs, einem Naturwachs und/ oder einem Gemisch aus diesen beiden oder aus einem Gemisch aus Harzen und Wachsen sowie einem den jeweils gewählten Komponenten hinzugegebenen Gleitmittel bestehen kann, aus einem Bad (23) verdampft, das in einem Verdampfer (19) hergestellt wird. Zu diesem Zwecke ist der Verdampfer (19) mit einem Schlitz (24) versehen, der sich in Richtung auf die zu bedampfende Metallschicht (2) aus dem Bad (23) öffnet. Diese Metallschicht (2) wird innerhalb einer Bedampfungsanlage (9) oberhalb des Verdampfers (19) über den Schlitz (24) geführt.

Aus dem Harzbad (23) steigen Dämpfe (21) in Richtung auf den Schlitz (24) auf, treten durch den Schlitz (24) in Richtung auf die zu bedampfende Metallschicht (2) aus und schlagen sich auf dieser Metallschicht (2) nieder, und zwar in einer jeweils gewünschten Dicke, die sich aus einer Vielzahl von Einflußgrößen ergibt, nämlich beispielsweise entsprechend der Zusammensetzung des Bades (23), der dem Bad (23) zugeführten Energie sowie der zugeführten Menge des zu verdampfenden Materials.

Die Beheizung des Bades (23) erfolgt z. B. über eine Wandung (25), die das Bad (23) umschließt. Diese Wandung (25) wird von einer Heizwicklung (26) beheizt, die an einer Stromquelle (20) liegt. Dem Bad (23) wird das organische Produkt (22) in Form einer Schmelze (33) zugeführt, die durch eine Einlaßöffnung (28) in einen von der Wandung (25) umschlossenen Innenraum (34) eintritt. Dabei wird die Schmelze (33) mit der gleichen Geschwindigkeit zugeführt, mit der das organische Produkt (22) in Richtung auf die Metallschicht (2) verdampft wird. Die Verdampfungsgeschwindigkeit einerseits und damit die Geschwindigkeit der Schmelzenzuführung (33) andererseits hängen ab von der Vorschubgeschwindigkeit des mit der Metallschicht (2) zu bedampfenden Trägermaterials (1), mit dem dieses durch die Bedampfungsanlage (9) hindurchgeführt wird.

Zum Zwecke der Bedampfung der Metallschicht (2) mit dar Schutzschicht (3) wird die Heizwicklung (26) an die Spannung der Stromquelle (20) gelegt. Die von der Heizwicklung (26) entwickelte Heizleistung erwärmt das Bad (23) oberhalb des Siedepunktes, aus dem die Dämpfe (21) aufsteigen. Sie treten durch den Schlitz (24) in Richtung auf die vorbeilaufende Metallschicht (2) aus dem Verdampfer (19) aus und schlagen sich auf der Metallschicht (2) als Schutzschicht (3) nieder.

Je nach der Auswahl der herzustellenden Schutzschicht (3) aus Harzen, Wachsen oder den jeweiligen Gemischen empfielt sich, die Aufdampfung der Schutzschicht (3) aus mindestens zwei Verdampfern (19, 35) vorzunehmen. Dabei können in den beiden Verdampfern (19, 35) Materialen (22, 38) gleicher oder verschiedener Art verdampft werden. Beispielsweise ist es möglich, in einem ersten Verdampfer (19) Harzmaterial (22) zu verdampfen, das entweder aus Kunstharz, Naturharz, oder aus einem Gemisch von beiden bestehen kann, während in dem zweiten Verdampfer (35) Naturwachs, Kunstwachs oder ein Gemisch aus beiden verdampft wird. Es ist jedoch auch möglich, in den beiden Verdampfern (19, 35) jeweils dieselben Materialien zu verdampfen, die entweder aus einem Naturharz oder Kunstharz oder aus einem Gemisch von beiden, oder aus einem Gemisch von beiden, oder aus einem Naturwachs oder Kunstwachs oder einem Gemisch aus diesen beiden oder aus einem Gemisch aus gleichen oder verschiedenen Wachsen und Harzen bestehen kann. Ähnlich wie der erste Verdampfer (19) besitzt auch der zweite Verdampfer (35) eine Stromquelle (36), die die gleiche Stromquelle wie diejenige des ersten Verdampfers sein kann. Im übrigen kann der zweite Verdampfer ähnlich ausgebildet sein, wie der erste Verdampfer, so daß aus ihm Dämpfe (37) in Richtung auf die zu bedampfende Metallschicht (2) aufsteigen. Die aus den beiden Verdampfern (19, 35) aufsteigenden Dämpfe (21, 37) bilden entweder zwei Schichten auf der Metallschicht (2) aus, von der die aus dem zweiten Verdampfer (35) aufsteigenden Dämpfe eine zweite Schutzschicht (39) bilden, oder die Dämpfe (37), die aus dem zweiten Verdampfer (35) aufsteigen treffen auf die vom ersten Verdampfer (19) erzeugte Schutzschicht (3), solange diese noch nicht ausgehärtet ist, so daß die aus dem zweiten Verdampfer (35) aufsteigenden Dämpfe (37) mit dem Material der ersten Schutzschicht (3) ein Gemisch bilden. Dieses Gemisch bildet gemeinsam mit der von ihm bedeckten Metallschicht (2) eine Gasdichte Einheit.

Entsprechend können die Abstände zwischen den aufeinander folgenden Verdampfern (19, 35) gewählt werden. Je deutlicher die von den Verdampfern (19, 35) auf die Metallschicht (2) aufgebrachten Dämpfe (21, 37) in Form von Schichten (3, 39) unterscheiden sollen, umso größer ist der Abstand zwischen den beiden Verdampfern (19, 35) zu wählen. Um eine innige Vermischung der von den beiden verdampfern (19, 35) auf die Metallschicht (2) aufgebrachten Materialien herbeizuführen, sollte ein enger Abstand zwischen den beiden Verdampfern (19, 35) gewählt werden, damit die aus dem zweiten Verdampfer (35) aufsteigenden Dämpfe (37) auf das vom ersten Verdampfer (19) aufgebrachte Material trifft, solange diese noch weitgehend unausgehärtet auf der Metallschicht (2) haftet.

### Beispiele:

1. Auf ein aus Polypropylen bestehendes Trägermaterial wird eine Aluminiumschicht unter üblichen Verdampfungsbedingungen aufgedampft. Unmittelbar im Anschluß an die Aufdampfung der Aluminiumschicht wird auf diese noch innerhalb der Bedampfungsanlage aus einem Verdampfer ein hochschmelzendes Harz aufgebracht, das innerhalb des Verdampfers auf eine Verdampfungstemperatur von 210° C erwärmt wird. Bei dieser Temperatur steigt der Dampf in Richtung auf die am Verdampfer vorbeilaufende Aluminiumschicht auf und schlägt sich auf dieser mit einer Schichtdicke von 0,05 /u nieder. Dabei wird das Harz PENTALYN 255 der Hercules Inc., Wilmington, Delaware, verwendet, das sich in einer gleichmäßigen Schichtdicke auf der Aluminiumschicht niederschlägt. Dort kühlt es sich unmittelbar nach seiner Aufbringung so schnell ab, daß die Folie unmittelbar nach dem Verlassen der Bedampfungsanlage zu einer Rolle aufgewickelt werden kann, ohne daß dadurch die Schutzschicht beeinträchtigt wird.
2. Auf ein Trägermaterial aus Polyäthylen wird bei üblichen Druck- und Temperaturbedingungen eine Aluminiumschicht aufgedampft. Unmittelbar nach der Aufbringung der Aluminiumschicht wird noch innerhalb der Bedampfungsanlage das Harzmaterial PLEXIGRUM M 527 der Röm GmbH, Darmstadt, auf die Metallschicht aufgedampft. Zu diesem Zwecke wird das Harzmaterial auf seine Verdampfungstemperatur von etwa 235° C gebracht. Bei dieser Verdampfungstemperatur tritt der Kunststoff aus dem in der Bedampfungsanlage angeordneten Verdampfer dempfförmig aus und schlägt sich gleichmäßig auf der Metallschicht nieder. Dabei verhaftet der Kunststoff fest mit der Metallschicht in einer Dicke von etwa 0,04 /u. Unmittelbar nach dem Auftreffen auf die Metallschicht besitzt der Kunststoff eine Härte, die das Aufwickeln der bedampften Folie zu einer Rolle gestattet.
3. Ein Trägermaterial aus einem Polyester wird bei üblichen Druck und überlicher Temperatur mit einer Aluminiumschicht bedampft. Noch innerhalb der Bedampfungsanlage wird unmittelbar nach der Aufbringung der Aluminiumschicht ein organisches Material auf diese Aufgedampft, das aus dem Harz Hallolyn 104 der Hercules Inc, Wilmington, Delaware besteht, dem das E-Wachs 20R 6149 der BASF beigemischt wird. Als ein günstiges Mischungsverhältnis hat sich herausgestellt, dem Hallolyn 104 10 % E-Wachs 20R 6149 zuzumischen. Dabei wird üblicher Weise das Gemisch aus einem einzigen Verdampfer in Richtung auf die zu beschützende Aluminiumschicht verdampft. Eine besonders flexible Schutzschicht wird dadurch erreicht, daß aus einem ersten Verdampfer das E-Wachs verdampft und auf der Aluminiumschicht niedergeschlagen Wird. Bevor diese eine feste Schicht auf der Aluminiumoberfläche bildet, wird aus einem zweiten Verdampfer das Hallolyn 104 in Richtung auf die zu bedampfende Oberfläche verdampft.

## Patentansprüche

1. Folie mit zwei im wesentlichen planparallelen Folienoberflächen, von denen mindestens eine mit einer Metallschicht (2) versehen ist, auf deren der Folienoberfläche abgewandten metallischen Oberfläche eine Schicht aufgebracht ist, die die metalische Oberfläche ganzflächig bedeckt, dadurch gekennzeichnet, daß die Schicht als eine fest auf der metallischen Oberfläche haftende Schutzschicht (3) ausgebildet ist, die aus einem organischen Produkt besteht und auf die metallische Oberfläche unmittelbar nach der Auftragung der Metallschicht (2) innerhalb einer zur Metallisierung benutzten Metallisierungsanlage noch vor einer mechanischen Belastung der metallischen Oberfläche aufgedampft ist, wobei das organische Produkt aus seiner dampfförmigen Phase eine gute Affinität zum Metall der Metallschicht (2) besitzt und fest auf dieser haftet.

2. Folie nach Anspruch 1, dadurch gekennzeichnet, daß das organische Produkt als ein Kunstharz mit einem Molekulargewicht größer als 10.000 kp ausgebildet ist.

3. Folie nach Anspruch 2, dadurch gekennzeichnet, daß das Kunstharz als ein Lackharz ausgebildet ist.

4. Folie nach Anspruch 1, dadurch gekennzeichnet, daß das organische Produkt als ein Kunstwachs mit einem Molekulargewicht kleiner als 10.000 kp ausgebidet ist.

5. Folie nach Anspruch 1, dadurch gekennzeichnet, daß das organische Produkt als ein Naturharz ausgebildet ist.

6. Folie nach einem der Ansprüch 1 bis 5, dadurch gekennzeichnet, daß das organische Produkt als ein das Bedrucken der metallischen Oberfläche erleichternder Druckprimer ausgebildet ist.

7. Folie nach einem der Ansprüche 1 bis 6, dadurch gekennzeichnet, daß die Schutzschicht (3) sehr dünn aufgetragen ist.

8. Folie nach einem der Ansprüche 1 bis 7, dadurch gekennzeichnet, daß die Schutzschicht (3) die unverkratzte metallische Oberfläche (6) bedeckt.

9. Folie nach einem der Ansprüche 1 bis 8, dadurch gekennzeichnet, daß die Schutzschicht (3) eine die Metallschicht (2) gegen Korrosion schützende antikorrosive Eigenschaft besitzt.

10. Folie nach einem der Ansprüche 1 bis 9, dadurch gekennzeichnet, daß die Schutzschicht (3) blockfest ist.

11. Folie nach einem der Ansprüche 1 bis 10, dadurch gekennzeichnet, daß die Schutzschicht (3) bedruckbar ist.

12. Folie nach einem der Ansprüche 1 bis 11, dadurch gekennzeichnet, da die Schutzschicht (3) als Gundlage für eine Kaschierung vorgesehen ist.

13. Folie nach einem der Ansprüche 1 bis 12, dadurch gekennzeichnet, daß die Schutzschicht (3) ein auf sie extrudiertes Material gleichmäßig aufnimmt, das auf ihr kristallisiert.

14. Folie nach einem der Ansprüche 1 bis 13, dadurch gekennzeichnet, daß die Schutzschicht (3) physiologisch einwandfrei ist.

15. Folie nach einem der Ansprüche 1 bis 14, dadurch gekennzeichnet, daß die Schutzschicht (3) geruchfrei ist.

16. Folie nach einem der Ansprüche 1 bis 15, dadurch gekennzeichnet, daß sie als Trägermaterial (1) ein Polypropylen aufweist.

17. Folie nach einem der Ansprüche 1 bis 15, dadurch gekennzeichnet, daß sie als Trägermaterial (1) ein Polyester aufweist.

18. Folie nach einem der Ansprüche 1 bis 17, dadurch gekennzeichnet, daß die Schutzschicht (3) eine ihr zugewandte oberste Lage der Metallschicht (2) so verfestigt, daß sie eine hohe Scheuerfestigkeit aufweist.

19. Verfahren zur Herstellung eines Schutzes für eine auf eine Folie aufgedampfte Metallschicht (2), bei dem die der Folie abgewandte metallische Oberfläche mit einer Schutzschicht (3) bedeckt wird, dadurch gekennzeichnet, daß die Schutzschicht (3) aus einem organischen Produkt hergestellt wird, das unmittelbar im Anschluß an die Aufdampfung der Metallschicht (2) innerhalb der zur Metallisierung benutzten Metallisierungsanlage auf die Metallschicht (2) aufgedampft wird, bevor die Metallschicht (2) mechanischen Belastungen ausgesetzt wird, wobei das organische Produkt sich aus seiner dampfförmigen Phase mit einer guten Affinität zum Metall auf die Metallschicht (2) niederschlägt und auf dieser fest haftet.

20. Verfahren nach Anspuch 19, dadurch gekennzeichnet, daß als organische Schicht ein Naturharz unmittelbar nach dem Aufdampfen der Metallschicht (2) auf deren metallische Oberfläche (6) aufgetragen wird, bevor die mit der Metallschicht bedeckte Folie aufgewickelt wird.

21. Verfahren nach einem der Anspruch 19 oder 20, dadurch gekennzeichnet, daß die organische Schicht sehr dünn aufgetragen wird.

22. Verfahren nach einem der Ansprüche 19 bis 21, dadurch gekennzeichnet, daß die organische Schicht auf die Metallschicht (2) unmittelbar aus mindestens einer beheizten Verdampfer (19) aufgetragen wird, dem ein zur Verdampfung kommendes organisches Material (22) mit einer Geschwindigkeit zugeführt wird, die in Übereinstimmung mit einer Bedampfungsgeschwindigkeit ist, mit der die Metallschicht (2) auf ein Trägermaterial (1) aufgetragen wird.

23. Verfahren nach Anspruch 22, dadurch gekennzeichnet, daß der Verdampfer (19) über seine Oberfläche elektrisch beheizt wird.

24. Verfahren nach einem der Ansprüche 19 bis 23, dadurch gekennzeichnet, daß ein Harzmaterial (22) als organische Schicht aus einem im Verdampfer (19) zur Verdampfung gebrachten Harz (23) auf die Metallschicht (2) aufgedampft wird.

## Claims

1. A foil having two substantially plane-parallel foil surfaces of which at least one is provided with a metal layer (2), on whose metallic surface that is remote from the surface of the foil is disposed a layer which covers the metallic surface over the entire area thereof, characterised in that the layer is in the form of a protective layer (3) which firmly adheres on the metallic surface and which comprises an organic product and is vapour-deposited on to the metallic surface immediately after the application of the metal layer (2) within a metallisation installation used for the metallisation operation prior to mechanical loading of the metallic surface, wherein the organic product has from its vapour phase a good affinity for the metal of the metal layer (2) and adheres firmly to the latter.

2. A foil according to claim 1 characterised in that the organic product is in the form of a synthetic resin of a molecular weight of greater than 10,000 kp.

3. A foil according to claim 2 characterised in that the synthetic resin is in the form of a lacquer resin.

4. A foil according to claim 1 characterised in that the organic product is in the form of an artificial wax of a molecular weight of less than 10,000 kp.

5. A foil according to claim 1 characterised in that the organic product is in the form of a natural resin.

6. A foil according to one of claims 1 to 5 characterised in that the organic product is in the form of a printing primer for facilitating printing on the metallic surface.

7. A foil according to one of claims 1 to 6 characterised in that the protective layer (3) is applied very thinly.

8. A foil according to one of claims 1 to 7 characterised in that the protective layer (3) covers the unscratched metallic surface (6).

9. A foil according to one of claims 1 to 8 characterised in that the protective layer (3) has an anti-corrosive property for protecting the metal layer (2) from corrosion.

10. A foil according to one of claims 1 to 9 characterised in that the protective layer (3) is block-resistant.

11. A foil according to one of claims 1 to 10 characterised in that the protective layer (3) can be printed upon.

12. A foil according to one of claims 1 to 11 characterised in that the protective layer (3) is provided as a foundation for a lining.

13. A foil according to one of claims 1 to 12 characterised in that the protective layer (3) uniformly receives a material which is extruded on to it and which crystallises on it.

14. A foil according to one of claims 1 to 13 characterised in that the protective layer (3) is physiologically acceptable.

15. A foil according to one of claims 1 to 14 characterised in that the protective layer (3) is odour-free.

16. A foil according to one of claims 1 to 15 characterised in that it has a polypropylene as a carrier material (1).

17. A foil according to one of claims 1 to 15 characterised in that it has a polyester as a carrier material (1).

18. A foil according to one of claims 1 to 17 characterised in that the protective layer (3) so strengthens an uppermost layer portion, which faces towards it, of the metal layer (2) that it has a high abrasion resistance.

19. A process for the production of a protection for a metal layer (2) which is vapour-deposited on to a foil, in which the metallic surface which is remote from the foil is covered with a protective layer (3), characterised in that the protective layer (3) is made from an organic product which is vapour-deposited on to the metal layer (2) immediately following vapour-deposit of the metal layer (2) within the metallisation installation used for the metallisation operation, before the metal layer (2) is exposed to mechanical loadings, wherein the organic product is deposited out of its vapour phase with a good affinity for the metal on to the metal layer (2) and adheres firmly to the latter.

20. A process according to claim 19 characterised in that as the organic layer a natural resin is applied to the metallic surface (6) of the metal layer (2) immediately after the vapour-deposit of the metal layer (2) before the foil covered with the metal layer is rolled up.

21. A process according to one of claims 19 and 20 characterised in that the organic layer is applied very thinly.

22. A process according to one of claims 19 to 21 characterised in that the organic layer is applied to the metal layer (2) directly from at least one heated vaporiser (19) to which an organic material (22) which is caused to be vaporised is fed at a speed which is in conformity with a vapour-deposit speed at which the metal layer (2) is applied to a carrier material (1).

23. A process according to claim 22 characterised in that the vaporiser (19) is electrically heated over its surface.

24. A process according to one of claims 19 to 23 characterised in that a resin material (22) is vapour-deposited on to the metal layer (2) as the organic layer comprising a resin (23) which is caused to vaporise in the vaporiser (19).

## Revendications

1. Feuille présentant deux surfaces pratiquement planes et parallèles dont au moins l'une est pourvue d'une couche métallique (2) sur la surface métallique de laquelle, située à l'opposé de la surface de la feuille, est disposée une couche qui recouvre totalement la surface métallique, **caractérisée** en ce que ladite couche forme une couche de protection (3) adhérant solidement à la surface métallique, qui est constituée d'un produit organique et qui est appliquée par vaporisation sur la surface métallique, directement après l'application de la couche métallique (2) à l'intérieur d'un dispositif de métallisation utilisé pour la métallisation et encore avant tout effort mécanique de la surface métallique, ce qui fait que le produit organique provenant de sa phase vapeur présente une bonne affinité pour le métal de la couche métallique (2) et adhère solidement à cette dernière.

2. Feuille selon la revendication 1, **caractérisée** en ce que le produit organique est une résine synthétique ayant une masse moléculaire supérieure à 10.000 kp.

3. Feuille selon la revendication 2, **caractérisée** en ce que la résine synthétique est une laque.

4. Feuille selon la revendication 1**, caractérisée** en ce que le produit organique est une cire synthétique ayant une masse moléculaire inférieure à 10.000 kp.

5. Feuille selon la revendication 1, **caractérisée** en ce que le produit organique est une résine naturelle.

6. Feuille selon l'une quelconque des revendications 1 à 5, **caractérisée** en ce que le produit organique forme un primaire d'impression facilitant l'impression de la surface métallique.

7. Feuille selon l'une quelconque des revendications 1 à 6, **caractérisée** en ce que la couche de protection (3) appliquée est très mince.

8. Feuille selon l'une quelconque des revendications 1 à 7, **caractérisée** en ce que la couche de protection (3) recouvre la surface métallique (6) non grattée.

9. Feuille selon l'une quelconque des revendications 1 à 8, **caractérisée** en ce que la couche de protection (3) possède des propriétés anticorrosives protégeant la couche métallique (2) de la corrosion.

10. Feuille selon l'une quelconque des revendications 1 à 9, **caractérisée** en ce que la couche de protection (3) est solide en bloc.

11. Feuille selon l'une quelconque des revendications 1 à 10, **caractérisée** en ce que la couche de protection (3) est imprimable.

12. Feuille selon l'une quelconque des revendications 1 à 11, **caractérisée** en ce que la couche de protection (3) est prévue comme base pour un doublage.

13. Feuille selon l'une quelconque des revendications 1 à 12, **caractérisée** en ce que la couche de protection (3) fixe uniformément une matière extrudée sur elle, qui cristallise sur elle.

14. Feuille selon l'une quelconque des revendications 1 à 13, **caractérisée** en ce que la couche de protection (3) est physiologiquement sans inconvénient.

15. Feuille selon l'une quelconque des revendications 1 à 14, **caractérisée** en ce que la couche de protection (3) est sans odeur.

16. Feuille selon l'une quelconque des revendications 1 à 15, **caractérisée** en ce qu'elle présente comme matière support (1) du polypropylène.

17. Feuille selon l'une quelconque des revendications 1 à 15, **caractérisée** en ce qu'elle présente comme matière support (1) un polyester.

18. Feuille selon l'une quelconque des revendications 1 à 17, **caractérisée** en ce que la couche de protection (3) renforce la couche supérieure, tournée vers elle, de la couche métallique (2) de telle manière qu'elle présente une résistance au frottement élevée.

19. Procédé de préparation d'une protection pour une couche métallique (2) appliquée par vaporisation sur une feuille, dans lequel la surface métallique située à l'opposé de la feuille est recouverte d'une couche de protection (3), **caractérisé** en ce que la couche de protection (3) est constituée d'un produit organique qui est appliqué par vaporisation sur la couche métallique (2) directement après l'application par vaporisation de la couche métallique (2) à l'intérieur du dispositif de métallisation utilisé pour la métallisation, avant que la couche métallique (2) soit soumise à des efforts mécaniques, ce qui fait que le produit organique se dépose à partir de sa phase vapeur sur la couche métallique (2) en présentant une bonne affinité pour le métal et adhère solidement à cette couche.

20. Procédé selon la revendication 19, **caractérisé** en ce que l'on applique directement après l'application par vaporisation de la couche métallique (2), sur la surface métallique (6) de cette dernière, une résine naturelle en tant que couche organique, avant que la feuille recouverte de la couche métallique soit enroulée.

21. Procédé selon la revendication 19 ou 20, **caractérisé** en ce que la couche organique appliquée est très mince.

22. Procédé selon l'une quelconque des revendications 19 à 21, **caractérisé** en ce que la couche organique est appliquée sur la couche métallique (2) directement à partir d'au moins un évaporateur chauffé (19) auquel on amène une matière organique (22) venant pour la vaporisation, à une vitesse qui concorde avec la vitesse de vaporisation utilisée pour l'application de la couche métallique (2) sur la matière support (1).

23. Procédé selon la revendication 22, **caractérisé** en ce que l'évaporateur (19) est chauffé électriquement sur sa surface.

24. Procédé selon l'une quelconque des revendications 19 à 23, **caractérisé** en ce que l'on applique par vaporisation sur la couche métallique (2) une matière résineuse (22) en tant que couche organique, à partir d'une résine (23) amenée dans l'évaporateur (19) pour la vaporisation.
